# EUROPEAN PATENT SPECIFICATION

(11) **EP 3 499 995 B1**
(45) Date of publication and mention of the grant of the patent: **02.11.2022**
(21) Application number: 16912447.6
(22) Date of filing: 12.08.2016
(51) Int. Cl.: H04W 72/04

(54) **RESOURCE SCHEDULING METHOD, SCHEDULER, BASE STATION, TERMINAL, AND SYSTEM**
RESSOURCENPLANUNGSVERFAHREN, PLANER, BASISSTATION, ENDGERÄT UND SYSTEM
PROCÉDÉ DE PROGRAMMATION DE RESSOURCES, PROGRAMMATEUR, STATION DE BASE, TERMINAL, ET SYSTÈME

(43) Date of publication of application: 19.06.2019
(73) Proprietor: Beijing Xiaomi Mobile Software Co., Ltd., Beijing 100085 (CN)
(72) Inventor: LIU, Yang, Beijing 100085 (CN); ZHANG, Ming, Beijing 100085 (CN)
(74) Representative: Loustalan, Paul William
(86) International application number: PCT/CN2016/095055
(87) International publication number: WO 2018/027992

(56) References cited:
- WO-A1-2016/064048
- WO-A1-2016/064049
- WO-A1-2017/180280
- CN-A- 101 127 806
- CN-A- 106 465 391
- ALCATEL-LUCENT SHANGHAI BELL ET AL: "Overview of Specification Impact for TTI Shortening", 3GPP DRAFT; R1-156721 OVERVIEW OF SPECIFICATION IMPACT FOR TTI SHORTENING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG1, no. Anaheim, US; 20141115 - 20141122 15 November 2015 (2015-11-15), XP051003102, Retrieved from the Internet: URL:http://www.3gpp.org/ftp/Meetings_3GPP_ SYNC/RAN1/Docs/ [retrieved on 2015-11-15]
- HUAWEI ET AL: "DCI design for short TTI", 3GPP DRAFT; R1-164060, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096624, Retrieved from the Internet: URL:http://www.3gpp.org/ftp/tsg_ran/WG1_RL 1/TSGR1_85/Docs/ [retrieved on 2016-05-14]

## Description

### TECHNICAL FIELD

The present disclosure generally relates to the technical field of wireless communication, and more particularly, to a resource scheduling method, a scheduler, and a terminal.

### BACKGROUND

With the development of wireless communication technology, related organizations are carrying on the research and standardization of the next generation of mobile communication technology standards, among which the research and standardization of latency reduction project is a key point. Relevant organizations have passed the latency reduction project of the physical layer recently, and the goal is to reduce a TTI (Transmission Time Interval) to a sTTI (short TTI), that is, to achieve the latency reduction purpose by reducing the length of the TTI.

In a LTE (Long Term Evolution) system, the TTI is 1 ms (millisecond), which corresponds to a length of one subframe. Therefore, in the current LTE system, the following scheme is used to activate the TTI resource: a position of the subframe to be activated is configured by an upper layer, and the subframe is activated by a scheduler at a lower layer according to the above configuration. 3GPP draft document by Alcatel-Lucent Shanghai Bell et al: "Overview of Specification Impact for TTI Shortening"; R1-156721 (2015-11-15), provides relevant background art.

### SUMMARY

The embodiments of the present disclosure provide a resource scheduling method, a scheduler, and a terminal. The technical solutions are as per the claims The invention is defined by the independent claims to which reference should now be made.

The technical solutions provided by the embodiments of the present disclosure may have the following beneficial effects.

By receiving the SPS configuration information sent by the RRC layer via the scheduler, and determining the sTTI resources activated in the target scheduling subframe according to the SPS configuration information and the reference information, the problems of limitation of flexibility of the sTTI resource scheduling, the resource waste and the increase of the time-consuming of reconfiguration due to that the sTTi resources to be activated are configured by the upper layer in the related art are solved; the scheduling of the sTTI resource is not limited by the fixed limit of the SPS configuration, the flexibility of the sTTI resource scheduling is improved, and the scheduler of the base station can easily adjust a granularity of the STTI resources, avoid the problem of waste of resources, and is conducive to saving time-consuming of reconfiguration.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an application scenario according to an exemplary embodiment;
Fig. 2 is a flow chart of a resource scheduling method according to an exemplary embodiment;
Fig. 3 is a schematic diagram of resource activation involved by the embodiment shown in Fig. 2;
Fig. 4 is a flow chart of a resource scheduling method according to another exemplary embodiment;
Fig. 5 is a flow chart of a resource scheduling method according to another exemplary embodiment;
Fig. 6 is a block diagram of a scheduler according to an exemplary embodiment;
Fig. 7 is a block diagram of a terminal according to an exemplary embodiment;
Fig. 8 is a structural diagram of a base station; and
Fig. 9 is a structural diagram of a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The network architecture and business scenarios described in the embodiments of the present disclosure are intended to more clearly illustrate the technical solutions of the embodiments of the present disclosure, and are not to be construed as limiting the technical solutions provided by the embodiments of the present disclosure. As will be apparent to those skilled in the art, with evolution of the network architecture and the emergence of new business scenarios, the technical solutions provided by the embodiments of the present disclosure are equally applicable to similar technical problems.

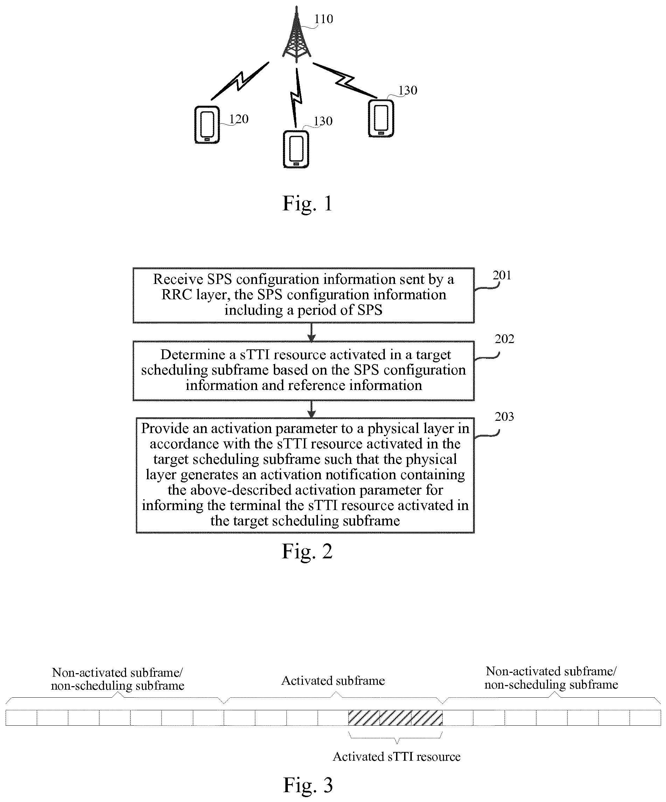

Fig. 1 is a schematic diagram of an application scenario according to an exemplary embodiment. The application scenario includes a base station 110 and at least one terminal.

As shown in Fig. 1, there are a plurality of terminals generally, and the plurality of terminals are located within a cell managed by the base station 110. In the embodiments of the present disclosure, a target terminal may be any one of the terminals in the cell managed by the base station 110. Illustratively, as shown in Fig. 1, the target terminal is denoted by a reference numeral 120, and the terminals other than the target terminal 120 in the cell managed by the base station 110 are denoted by a reference numeral 130. In the embodiments of the present disclosure, only an interaction flow between the base station 110 and the target terminal 120 is exemplified, and an interaction flow between the base station 110 and each of the other terminals 130 may be referred to the interaction flow between the base station 110 and the target terminal 120.

The base station 110 communicates with a terminal (e.g., the terminal 120, and the terminal 130) through some kind of air interface technology, for example, they may communicate with each other via the cellular technology. The technical solutions described in the embodiments of the present disclosure may be applied to a LTE system, and may be applied to an evolved system subsequent to the LTE system, such as a LTE-A (LTE-Advanced) system or a 5th Generation (5G) system.

In the embodiments of the present disclosure, the terms "network" and "system" are often used interchangeably, but those skilled in the art will understand its meaning. The terminal to which the embodiments of the present disclosure relate may include various types of hand-held devices, vehicle-mounted devices, wearable devices, computing devices with wireless communication function, or other processing devices connected to a wireless modem, and various forms of user equipment (UE), a mobile station (MS), a terminal device, and the like. For convenience of description, the above-mentioned devices are collectively referred to as terminals. The base station (BS) to which the embodiments of the present disclosure relate is a device deployed in a radio access network to provide a wireless communication function for the terminal. The base station may include various forms of macro base stations, micro base stations, relay stations, access points, and the like. In a system employing different radio access technologies, the name of a device having a base station function may be different, for example, an evolved Node B (evolved NodeB, eNB or eNodeB) in an LTE system. For convenience of description, in the embodiments of the present disclosure, the above-mentioned device for providing the wireless communication function for the terminal are collectively referred to as a base station or a BS.

In one possible design, each sTTI resource is 0.5 ms. In another possible design, each sTTI resource is two OFDM symbols. After the TTI is reduced to sTTI, one subframe may include multiple sTTI resources. For example, when each sTTI resource is 2 OFDM symbols, one subframe may include 7 sTTI resources. If the number and location of the sTTI resources to be activated are configured by the upper layer by using the above solution, the flexibility of the sTTI resource scheduling is restricted and there is a problem of waste of resources. Moreover, if the number and location of the sTTI resource to be activated need to be adjusted, reconfiguration by the upper layer is needed. During this time, signaling interaction between the upper layer and the lower layer is required, which obviously increases the time for reconfiguration, and obviously does not meet the requirement of latency reduction. Based on this, the embodiments of the present disclosure provide a resource scheduling method, and a scheduler, a base station, a terminal and a system based on this method to solve the allocation and scheduling problem of the sTTI resource. The core idea of the technical solutions provided by the embodiments of the present disclosure is that the period of the SPS is configured by the upper layer, and the sTTI resource is allocated and activated by the lower layer scheduler.

Hereinafter, the embodiments of the present disclosure will be described in further detail based on the general aspects of the above-described embodiments of the present disclosure.

Fig. 2 is a flow chart of a resource scheduling method according to an exemplary embodiment. The method is applied to a scheduler of a base station. The scheduler may be a functional entity of the base station, and is mainly responsible for allocating and scheduling time-frequency resources. The method may include the following steps.

In step 201, SPS configuration information sent by a RRC layer is received, the SPS configuration information including a period of SPS.

In the embodiments of the present disclosure, the period of the SPS is configured by an upper layer (i.e., an RRC layer). The period of the SPS is used to indicate a time interval between two adjacent scheduling subframes. The scheduling subframe means a subframe from which the scheduler can select the sTTI resource for allocation and activation. In the embodiments of the present disclosure, a period length of the SPS is not limited, and the period length of the SPS includes, but is not limited to, any one of 40 ms, 20 ms, 10 ms, 5 ms, 2 ms, or 1 ms. In the present embodiment, it is assumed that the SPS configuration information is configured by the base station for a target terminal in a cell under its management. For example, when the period of the SPS configured by the base station for the target terminal is 10 ms, the time interval between two adjacent scheduling subframes of the target terminal is 10 ms. Within the scheduling subframe of the target terminal, the scheduler may select the sTTI resource to be allocated to the target terminal, and activate the allocated sTTI resource.

In the embodiments of the present disclosure, there arc the following two possibilities when configuring the SPS configuration information by the upper layer. First, the number and location of the sTTI resources to be activated are not given; second, a reference value for the number of the sTTI resource to be activated is given, but the location of the sTTI resource to be activated is not given. For the second possible case, the SPS configuration information also includes a reference value of the number of the sTTI resource to be activated, and the reference value may be set by the upper layer according to the actual traffic conditions. For example, when each sTTI resource is 2 OFDM symbols, one subframe may include 7 sTTI resources, and the upper layer may give a reference value, for example 3, of the number of the sTTI resources to be activated, depending on the actual service conditions of the target terminal.

In the case where both sTTI resources of 0.5 ms and 2 OFDM symbols are supported at the same time, if the upper layer provides the reference value of the number of the sTTI resources to be activated, there are seven possible values of the reference value, and the reference value may be represented by 3 bits.

In step 202, the sTTI resource activated in a target scheduling subframe is determined based on the SPS configuration information and reference information.

In the embodiments of the present disclosure, the scheduler at the lower layer is responsible for allocating and activating the sTTI resources. The scheduler may be located at a MAC (Media Access Control) layer. The scheduler determines whether the sTTI resource needs to be activated in each scheduling subframe of the target terminal according to the SPS configuration information and the reference information of the target terminal, and when it is determined that the sTTI resource in the target scheduling subframe needs to activated, further determines the sTTI resource activated in the target scheduling subframe. The scheduler specifically determines the number and location of the sTTI resources activated in the target scheduling subframe. The reference information includes, sTTI configuration information, and, optionally, at least one of data to be scheduled by the scheduler, and radio resource conditions. The sTTI configuration information includes information indicating duration of each sTTI resource, for example, the sTTI configuration information includes two selectable parameters of 0.5 ms and 2 OFDM symbols. The data to be scheduled by the scheduler may include information such as a total amount of data scheduled by the scheduler, and the amount of data scheduled by the scheduler for the target terminal. The radio resources may include an allocation, an occupation, and a quality of radio resources and the like, for example, a condition of allocating the sTTI resources for other terminals, and interference of the sTTI resources. The scheduler processes the above-mentioned individual information according to a preset scheduling algorithm to determine whether the sTTI resource needs to be activated in each scheduling subframe of the target terminal, and further determine the sTTI resource activated in the target scheduling subframe when it is determined that the sTTI resource in the target scheduling subframe needs to be activated.

In an example, as shown in Fig. 3, assuming that each sTTI resource is 2 OFDM symbols, then one subframe includes 7 sTTI resources. As shown in Fig. 3, the scheduler selects the last three sTTI resources to be activated within a certain scheduling subframe of the target terminal. Further, the scheduler may appropriately adjust the number and/or the position of the activated sTTI resources according to the SPS configuration information and the reference information in different scheduling subframes of the target terminal. After the sTTI resource in the scheduling subframe is activated by the scheduler, the scheduling subframe is the activated subframe.

In step 203, an activation parameter is provided to a physical layer in accordance with the sTTI resource activated in the target scheduling subframe such that the physical layer generates an activation notification containing the above-described activation parameter for informing the terminal the activated sTTI resource in the target scheduling subframe.

The activation parameter is used to indicate the sTTI resource activated in the target scheduling subframe. The activation parameter indicates the number and location of the sTTI resources activated in the target scheduling subframe. For example, when the target scheduling subframe is a certain scheduling subframe of the target terminal, the base station sends to the target terminal an activation notification containing an activation parameter for notifying the target terminal of the sTTI resource activated in the target scheduling subframe.

Optionally, the activation notification is DCI, which contains a parameter for indicating the number and location of the activated sTTI resource. For example, the number and location of the sTTI resource may be represented by a manner of bitmap. In addition, if the upper layer provides a reference value for the number of the activated sTTI resources in the SPS configuration information and selects the reference value as the final determined number of the activated sTTI resources, then the activation parameter contained in the activation notification may only indicate the location of the activated sTTI resource, thereby saving the number of bits required to activate the parameter. Optionally, the activation notification takes one subframe as the notification period. When the activation notification is DCI, slow DCI is selected, i.e., the notification period is one subframe of DCI (i.e., 1 ms).

In addition, for different activated subframes, the scheduler can properly adjust the number and/or location of the activated sTTI resource according to the SPS configuration information and the reference information to realize the reconfiguration of the sTTI resource. When the scheduler needs to deactivate the sTTI resource, the scheduler may send an inactivation instruction to the physical layer to cause the physical layer to generate a deactivation notification, and the base station sends a deactivation notification to the terminal for informing the terminal to deactivate the sTTI resource.

From above, in the method provided by the embodiments of the present disclosure, the scheduler receives the SPS configuration information sent by the RRC layer, and determines the activated sTTI resource in the target scheduling subframe according to the SPS configuration information and the reference information. In this way, the problems in the related art that the flexibility of the sTTI resource scheduling is restricted, the resources are wasted and the time-consuming of the reconfiguration increases due to that the sTTI resources to be activated are configured by the upper layer, are solved; the scheduling of the sTTI resource is not restricted by the set limit of the SPS configuration, the flexibility of the sTTI resource scheduling is improved, and the scheduler of the base station can easily adjust the sTTI resource granularity, avoid the problem of waste of resources, and is conducive to saving time-consuming of reconfiguration.

In addition, the solutions provided by the embodiments of the present disclosure is applicable to an uplink SPS and a downlink SPS.

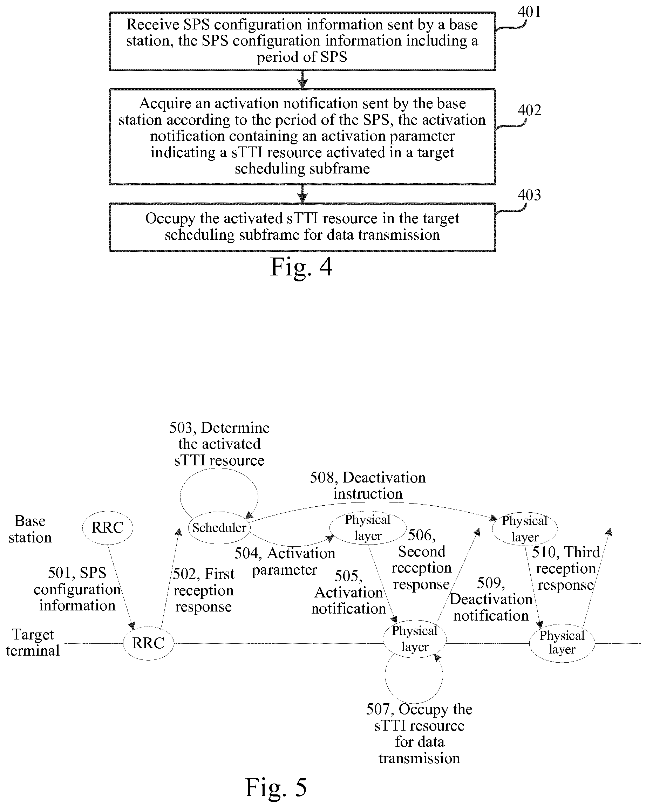

Fig. 4 is a flow chart of a resource scheduling method according to another exemplary embodiment. The method is applied to a terminal. The method may include the following steps.

In step 401, SPS configuration information sent by a base station is received, the SPS configuration information including a period of SPS.

In exemplary embodiments of the present disclosure, the period of the SPS is configured by an upper layer (i.e., an RRC layer) of the base station. The period of SPS is used for indicating a time interval between two adjacent scheduling subframes. In general, the SPS configuration information also includes an offset value. The terminal determines the position of individual scheduling subframe allocated by the base station for the terminal according to the period and the offset value of the SPS.

In step 402, an activation notification sent by the base station is acquired according to the period of the SPS, the activation notification containing an activation parameter indicating the sTTI resource activated in the target scheduling subframe.

After determining the position of each scheduling subframe, the terminal acquires the information sent by the base station in the scheduling subframe, and analyzes the information to determine whether the base station allocates the sTTI resources for the terminal in the scheduling subframe. If the terminal acquires the activation notification sent by the base station within the target scheduling subframe, and determines that the activation notification is sent by the base station to the terminal by analysis, the terminal reads the activation parameter contained in the activation notification. The activation parameter is used for indicating the sTTI resource activated in the target scheduling subframe. The activation parameter is used for indicating the number and location of the sTTI resource activated in the target scheduling subframe.

Optionally, the activation notification is DCI, which contains a parameter for indicating the number and location of the activated sTTI resource. For example, the number and location of the sTTI resource may be represented in the form of bitmap. In addition, if the upper layer of the base station gives a reference value of the number of the activated sTTI resources in the SPS configuration information and selects the reference value as the final determined number of the activated sTTI resources, then the activation parameter included in the activation notification may only indicate the location of the activated sTTI resource, thereby saving the number of bits required to activate the parameter.

In step 403, the activated sTTI resource is occupied in the target scheduling subframe for data transmission.

After determining the sTTI resource activated in the target scheduling subframe, the terminal may occupy the activated sTTI resource in the target scheduling subframe for receiving and/or sending data.

In the present embodiment, an operation flow at the terminal side corresponding to the base station side is provided, and the terminal determines its sTTI resource allocated by the base station based on the acquired activation notification and occupies the above-mentioned activated sTTI resource for data transmission. In the method provided by the embodiments of the present disclosure, the scheduling of the sTTI resource is not restricted by the fixed limit of the SPS configuration, and the flexibility of the sTTI resource scheduling is improved. The scheduler of the base station can easily adjust the granularity of the sTTI resource, avoid the waste of resources, and is beneficial to saving time for reconfiguration.

Fig. 5 is a flow chart of a resource scheduling method according to another exemplary embodiment. This method may be applied to the application scenario shown in Fig. 1. The method may include the following steps.

In step 501, an RRC layer of a base station sends SPS configuration information to a scheduler, and sends the SPS configuration information to a target terminal.

The SPS configuration information includes a period of SPS. Optionally, the SPS configuration information also includes a reference value of a number of the activated sTTI resource. Optionally, the SPS configuration information also includes indication information for establishing or releasing a connection, HARQ (Hybrid Automatic Repeat reQuest) information, and the like.

In step 502, the target terminal sends a first reception response to the base station after receiving the SPS configuration information.

The first reception response is used for indicating that the target terminal has successfully received the SPS configuration information.

In step 503, the scheduler of the base station determines the sTTI resource activated in the target scheduling subframe of the target terminal according to the SPS configuration information and reference information.

The scheduler determines whether the sTTI resource needs to be activated in respective scheduling subframes of the target terminal, and further determines the number and position of the activated sTTI resource in the target scheduling subframe when it is determined that the sTTI resource in the target scheduling subframe needs to be activated. The reference information includes, sTTI configuration information, and optionally, at least one of data to be scheduled by the scheduler, and radio resource conditions.

In step 504, the scheduler of the base station provides an activation parameter to a physical layer.

The activation parameter is used to indicate the sTTI resource activated in the target scheduling subframe of the target terminal. Optionally, the activation parameter is used to indicate the number and location of the sTTI resources activated in the target scheduling subframe.

In step 505, the physical layer of the base station generates an activation notification containing the above-described activation parameter and sends the activation notification to the target terminal.

The activation notification is used to inform the target terminal of the sTTI resource activated in the target scheduling subframe, for example, the number and location of the activated sTTI resource. Optionally, the activation notification is DCI. Optionally, the activation notification takes one subframe (i.e., 1 ms) as a notification period.

Accordingly, the target terminal acquires the activation notification sent by the base station according to the SPS configuration information.

In step 506, the target terminal sends a second reception response to the base station.

The second reception response is used to indicate that the target terminal has successfully received the activation notification.

In step 507, the target terminal occupies the activated sTTI resource in the target scheduling subframe for data transmission.

In step 508, the scheduler of the base station sends a deactivation instruction to the physical layer.

In step 509, the physical layer of the base station generates a deactivation notification and sends the deactivation notification to the target terminal.

When the scheduler needs to deactivate the sTTI resource, the scheduler may send a deactivation instruction to the physical layer to cause the physical layer to generate a deactivation notification. The base station sends the deactivation notification to the target terminal, so as to inform the target terminal to deactivate the sTTI resource.

In step 510, the target terminal sends a third reception response to the base station after receiving the deactivation notification.

The third reception response is used to indicate that the target terminal has successfully received the deactivation notification. After that, the target terminal stops occupying the sTTI resource.

From above, in the method provided by the embodiments of the present disclosure, the scheduler receives the SPS configuration information sent by the RRC layer, and determines the activated sTTI resource in the target scheduling subframe according to the SPS configuration information and the reference information. In this way, the problems in the related art that the flexibility of the sTTI resource scheduling is restricted, the resources are wasted and the time-consuming of the reconfiguration increases due to that the sTTI resources to be activated are configured by the upper layer, are solved; the scheduling of the sTTI resource is not restricted by the fixed limit of the SPS configuration, the flexibility of the sTTI resource scheduling is improved, and the scheduler of the base station can easily adjust the sTTI resource granularity, avoid the problem of waste of resources, and is conducive to save time-consuming of reconfiguration.

Embodiments of devices of the present disclosure are described hereinafter, which may be used for performing the embodiments of methods of the present disclosure. For the details not described in the embodiments of devices of the present disclosure, the embodiments of methods of the present disclosure may be referred to.

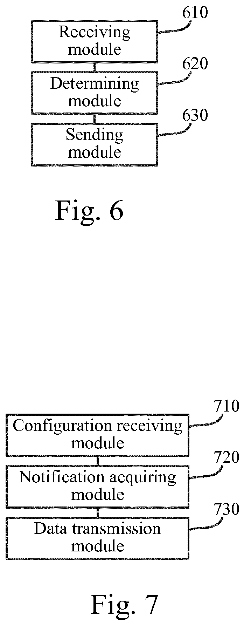

Fig. 6 is a block diagram of a scheduler according to an exemplary embodiment. The scheduler is applied to the base station. The scheduler has a function of implementing the resource scheduling method at the scheduler side, and the function can be implemented by hardware or by executing corresponding software by hardware. The scheduler may include a receiving module 610, a determining module 620, and a sending module 630.

The receiving module 610 is configured to receive SPS configuration information sent by an RRC layer, the SPS configuration information including a period of SPS, and the period of the SPS being used for indicating a time interval between two adjacent scheduling subframes.

The determining module 620 is configured to determine an sTTI resource activated in a target scheduling subframe according to the SPS configuration information and reference information.

The sending module 630 is configured to provide an activation parameter to a physical layer in accordance with the sTTI resource activated in the target scheduling subframe, such that the physical layer generates an activation notification containing the activation parameter for notifying a terminal of the sTTI resource activated in the target scheduling subframe.

Alternatively, the SPS configuration information further includes a reference value of a number of the activated sTTI resources.

The activation parameter is configured to indicate a number and a location of the sTTI resource activated in the target scheduling subframe.

Alternatively, one subframe is taken as a notification period by the activation notification.

Alternatively, the activation notification is DCI.

Alternatively, the reference information includes sTTI configuration information, and at least one of to be scheduled by the scheduler, and a radio resource condition.

Alternatively, each sTTI resource is 0.5 ms or two OFDM symbols.

From above, in the scheduler provided by the embodiments of the present disclosure, the scheduler receives the SPS configuration information sent by the RRC layer, and determines the activated sTTI resource in the target scheduling subframe according to the SPS configuration information and the reference information. In this way, the problems in the related art that the flexibility of the sTTI resource scheduling is restricted, the resources are wasted and the time-consuming of the reconfiguration increases due to that the sTTI resources to be activated are configured by the upper layer, are solved; the scheduling of the sTTI resource is not restricted by the fixed limit of the SPS configuration, the flexibility of the sTTI resource scheduling is improved, and the scheduler of the base station can easily adjust the sTTI resource granularity, avoid the problem of waste of resources, and is conducive to save time-consuming of reconfiguration.

An exemplary embodiment of the present disclosure also provides a base station that includes a scheduler as provided in the embodiment shown in Fig. 6.

Fig. 7 is a block diagram of a terminal according to an exemplary embodiment. The terminal has a function of implementing the resource scheduling method at the terminal side, and the function can be implemented by hardware or by executing corresponding software by hardware. The terminal may include: a configuration receiving module 710, a notification acquiring module 720, and a data transmission module 730.

The configuration receiving module 710 is configured to receive SPS configuration information sent by a base station, the SPS configuration information including a period of SPS, and the period of the SPS being used for indicating a time interval between two adjacent scheduling subframes.

The notification acquiring module 720 is configured to acquire an activation notification sent by the base station according to a period of the SPS, the activation notification containing an activation parameter for indicating an sTTI resource activated in a target scheduling subframe.

The data transmission module 730 is configured to occupy the activated sTTI resource in the target scheduling subframe for data transmission.

The activation parameter is configured to indicate a number and a location of the sTTI resource activated in the target scheduling subframe.

Alternatively, the activation notification is DCI.

Alternatively, each sTTI resource is 0.5 ms or two OFDM symbols.

In the device provided by the embodiments of the present disclosure, the scheduling of the sTTI resource is not limited to the fixed limit of the SPS configuration, and the flexibility of the sTTI resource scheduling is improved. The scheduler of the base station can easily adjust the granularity of the sTTI resource, avoid the problem of the waste of resources, and is beneficial to save time for reconfiguration.

An exemplary embodiment of the present disclosure also provides a resource scheduling system (also referred to as a communication system), the system including: a base station and at least one terminal. The base station includes a scheduler as provided in the embodiment shown in Fig. 6. The terminal is the terminal provided in the embodiment shown in Fig. 7.

It should be explained, the above-described embodiment provides only an example of the functions of each of the functional modules described above, and in actual applications when the device provided by the above embodiments realizes its function, the above divided functional modules are just taken as an example. In practical applications, the above functions can be assigned to different functional modules according to requirements, namely, inner structures of the device may be divided into different functional modules to accomplish the whole or a part of functions described above.

With respect to the device in the above embodiment, the specific manner for performing the operation by each module has been described in detail in the embodiment relating to the method, which will not be elaborated herein.

The present disclosure also provides a base station capable of implementing the resource scheduling method at the base station side provided by the present disclosure. The base station includes: a processor; and a memory for storing instructions executable by the processor. The processor is configured to:
control a radio resource control RRC layer to send semi-persistent scheduling SPS configuration information to a scheduler, the SPS configuration information comprising a period of SPS, and the period of the SPS being used for indicating a time interval between two adjacent scheduling subframes;
control the scheduler to determine a short transmission time interval sTTI resource activated in a target scheduling subframe according to the SPS configuration information and reference information, and provide an activation parameter to a physical layer according to the sTTI resource activated in the target scheduling subframe; and
control the physical layer to generate an activation notification containing the activation parameter, and sending the activation notification to the terminal, the activation notification being used for notifying a terminal of the sTTI resource activated in the target scheduling subframe.

An exemplary embodiment of the present disclosure also provides a terminal capable of implementing the resource scheduling method at the terminal side provided by the present disclosure. The terminal includes: a processor; and a memory for storing instructions executable by the processor. The processor is configured to:
receive SPS configuration information sent by a base station, the SPS configuration information including a period of SPS, the period of the SPS being used for indicating a time interval between two adjacent scheduling subframes;
acquire an activation notification sent by the base station according to the period of the SPS, the activation notification containing an activation parameter for indicating a short transmission time interval sTTI resource activated in a target scheduling subframe; and
occupy the activated sTTI resource in the target scheduling subframe for data transmission.

The solutions provided by the embodiments of the present disclosure have been described mainly in terms of interaction between the base station and the terminal. It is to be understood that in order to realize the above functions, the base station and the terminal includes a hardware structure and/or a software module for executing each function correspondingly. In combination with elements and algorithm steps of individual examples described in the embodiments disclosed in this disclosure, the embodiments of the present disclosure may be implemented in hardware or in combination with hardware and computer software. Whether a function is implemented in hardware or computer software-driven hardware depends on the specific application and design constraints of the technical solutions. One skilled in the art can use different methods to implement the described functions for each particular application, but such implementations should not be considered as going beyond the scope of the technical solutions of the embodiments of the present disclosure.

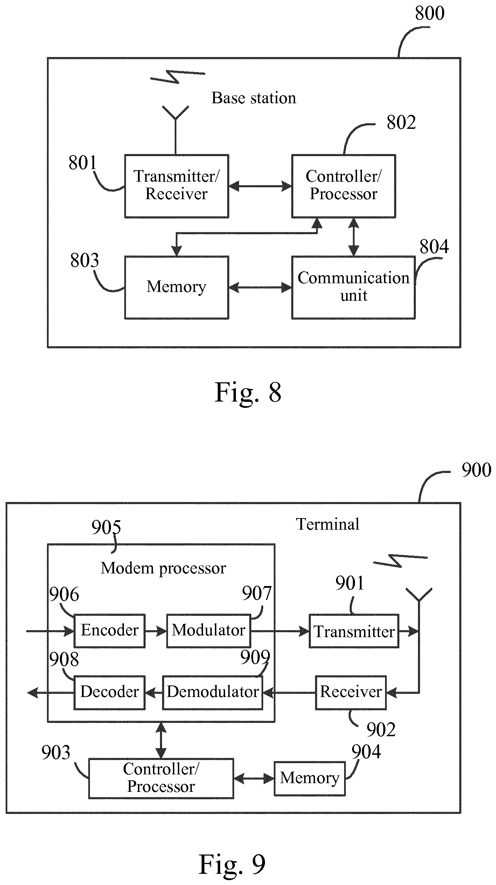

Fig. 8 is a structural diagram of a base station according to an exemplary embodiment

The base station 800 includes a transmitter/receiver 801 and a processor 802. The processor 802 may also be a controller, and is represented by a "controller/processor 802" in Fig. 8. The transmitter/receiver 801 is used to support information transceiving between the base station and the terminal in the above embodiment, and to support radio communication between the terminal and other terminals. The processor 802 performs various functions for communicating with the terminal. In the uplink, an uplink signal from the terminal is received via an antenna, demodulated by the receiver 801 (e.g., a high frequency signal is demodulated into a baseband signal), and further processed by the processor 802 to recover the traffic data and signaling information sent by the terminal. In the downlink, the traffic data and signaling messages are processed by the processor 802 and modulated by the transmitter 801 (e.g., modulating the baseband signal into the high frequency signal) to generate a downlink signal and transmit it to the terminal via the antenna. It should be noted that the above-described functions of demodulation or modulation may be performed by the processor 802 as well. For example, the processor 802 is also operable to perform steps in the method embodiments described above with respect to the base station side, and/or other steps of the technical solution described in the embodiments of the present disclosure.

Further, the base station 800 may further include a memory 803 for storing program code and data of the base station 800. In addition, the base station may further include a communication unit 804. The communication unit 804 is used to enable the base station to communicate with other network entities, such as network devices in the core network. For example, in the LTE system, the communication unit 804 may be an S1-U interface for supporting a communication between the base station and a Serving Gateway (S-GW), or the communication unit 804 may be an S1-MME interface for supporting a base station to communicate with a Mobility Management Entity (MME).

It will be appreciated that Fig. 8 only shows a simplified design of the base station 800. In practice, the base station 800 may contain any number of transmitters, receivers, processors, controllers, memory, communication units, etc., and all base stations that may implement the embodiments of the present disclosure are within the scope of the embodiments of the present disclosure.

Fig. 9 is a structural diagram of a terminal according to an exemplary embodiment.

The terminal 900 includes a transmitter 901, a receiver 902, and a processor 903. The processor 903 may also be a controller, and is represented by the "controller/processor 903" in Fig. 9. Optionally, the terminal 900 may also include a modem processor 905. The modem processor 905 may include an encoder 906, a modulator 907, a decoder 908, and a demodulator 909.

In one example, the transmitter 901 adjusts (e.g., analog converts, filters, amplifies and upconverts, etc.) the output samples and generates an uplink signal that is transmitted via an antenna to the base station described in the above embodiments. In the downlink, the antenna receives the downlink signal transmitted by the base station in the above embodiment. The receiver 902 adjusts (e.g., filters, amplifies, downconverts, digitizes, etc.) signals received from the antenna and provides input samples. In the modem processor 905, the encoder 906 receives the traffic data and signaling messages to be sent in the uplink and processes (e.g., formats, codes and interleaves) the traffic data and the signaling messages. The modulator 907 further processes (e.g., symbol maps and modulates) the encoded traffic data and signaling messages and provides output samples. The demodulator 909 processes (e.g., demodulates) the input samples and provides a symbol estimate. The decoder 908 processes (e.g., deinterleaves and decodes) the symbol estimate and provides decoded data and signaling messages that are sent to the terminal 900. The encoder 906, the modulator 907, the demodulator 909, and the decoder 908 may be implemented by a combined modem processor 905. These units arc processed according to the radio access technology employed by the radio access network (e.g., LTE and access technologies of other evolved systems). It should be noted that when the terminal 900 does not include the modem processor 905, the above-described functions of the modem processor 905 may be achieved by the processor 903.

The processor 903 controls the operation of the terminal 900 so as to perform the processing performed by the terminal 900 in the above-described embodiments of the present disclosure. For example, the processor 903 may also be used to perform the steps related to the terminal side in the method embodiments described above, and/or other steps of the technical solutions described in the embodiments of the present disclosure.

Further, the terminal 900 may further include a memory 904 for storing the program code and data for the terminal 900.

The processor for executing the functions of the base station or the terminal in the embodiments of the present disclosure may be a Central Processing Unit (CPU), a general purpose processor, a Digital Signal Processor (DSP), an Application Specific Integrated Circuit (ASIC), a Field Programmable Gate Array (FPGA), or other programmable logic device, a transistor logic device, a hardware component, or any combination thereof, which may implement or perform various illustrative logical blocks, modules, and circuits described in connection with the disclosure of the embodiments of the present disclosure. The processor may also be a combination that implements a computing function, for example including one or more microprocessor combinations, a combination of a DSP and a microprocessor, and the like.

The steps of the method or algorithm described in connection with the disclosure of the embodiments of the present disclosure may be implemented in hardware, or may be implemented in a manner that the processor executes software instructions. The software instructions may be composed of corresponding software modules, which may be stored in a Random Access Memory (RAM), a flash memory, a Read Only Memory (ROM), an Erasable Programmable ROM (EPROM), an Electrically EPROM (EEPROM), a register, a hard disk, a removable hard disk, a CD-ROM, or any other form of storage medium known in the art. An exemplary storage medium is coupled to the processor such that the processor can read information from and write information into the storage medium. The storage medium can also be an integral part of the processor. The processor and the storage medium may be located in the ASIC. In addition, the ASIC may be located in a base station or a terminal. The processor and the storage medium may also exist in the base station or the terminal as discrete components.

It should be appreciated by those skilled in the art that in one or more of the above-described examples, the functions described in the embodiments of the present disclosure may be implemented in hardware, software, firmware, or any combination thereof. When being implemented using software, these functions may be stored in a computer-readable medium or transmitted as one or more instructions or code in the computer-readable medium. The computer-readable medium includes a computer storage medium and a communication medium, wherein the communication medium includes any medium that facilitates transfer of a computer program from one place to another. The storage medium may be any available medium that can be accessed by a general purpose or special purpose computer.

The present disclosure also provides a computer storage medium for storing the computer software instructions for use by the base station described above and including a program designed to execute the resource scheduling method at the base station side.

The present disclosure also provides a computer storage medium for storing computer software instructions for use by the terminal and including a program designed to execute a resource scheduling method at the terminal side.

It is to be understood that the reference to "a plurality of" herein refers to two or more. The term "and/or" describes an association relationship of the associated objects, indicating that there may be three relationships. For example, A and/or B may denote the following three conditions: there is only A, there are A and B at the same time, and there is only B. The character "/" generally indicates an "or" relationship between the associated objects before and after this character.

## Claims

1. A resource scheduling method, applied in a scheduler of a base station, the method comprising:
receiving (201) semi-persistent scheduling, SPS, configuration information sent by a radio resource control, RRC, layer, the SPS configuration information comprising a period of SPS, and the period of the SPS being used for indicating a time interval between two adjacent scheduling subframes;
determining (202) a location and a number of a short transmission time interval, sTTI, resource activated in a target scheduling subframe according to the SPS configuration information and reference information; wherein the reference information comprises sTTI configuration information; and
providing (203) an activation parameter to a physical layer according to the sTTI resource activated in the target scheduling subframe, such that the physical layer generates an activation notification containing the activation parameter for notifying a terminal of the sTTI resource activated in the target scheduling subframe, wherein the activation parameter is configured to indicate the number and the location of the sTTI resource activated in the target scheduling subframe.

2. The method according to claim 1, wherein one subframe is taken as a notification period by the activation notification.

3. The method according to claim 1 or 2, wherein the activation notification is downlink control information, DCI.

4. The method according to any one of claims 1 to 3, wherein the reference information further comprises at least one of: data to be scheduled by the scheduler, or a radio resource condition.

5. The method according to any one of claims 1 to 4, wherein each sTTI resource is 0.5 ms or two orthogonal frequency division multiplexing, OFDM, symbols.

6. A resource scheduling method, applied in a terminal, the method comprising:
receiving (401), by a radio resource control, RRC, layer, semi-persistent scheduling, SPS, configuration information sent by a base station, the SPS configuration information comprising a period of SPS, and the period of the SPS being used for indicating a time interval between two adjacent scheduling subframes;
acquiring (402), by a physical layer, an activation notification sent by the base station according to the period of the SPS, the activation notification containing an activation parameter for indicating a short transmission time interval, sTTI, resource activated in a target scheduling subframe, wherein the activation parameter is configured to indicate a number and a location of the sTTI resource activated in the target scheduling subframe; and
occupying (403) the number and the location of the activated sTTI resource in the target scheduling subframe for data transmission.

7. The method according to claim 6, wherein the activation notification is downlink control information DCI.

8. The method according to claim 6 or 7, wherein each sTTI resource is 0.5 ms or two orthogonal frequency division multiplexing OFDM symbols.

9. A scheduler, applied in a base station, the scheduler comprising:
a receiving module (610) configured to receive semi-persistent scheduling, SPS, configuration information sent by a radio resource control, RRC, layer, the SPS configuration information comprising a period of SPS, and the period of the SPS being used for indicating a time interval between two adjacent scheduling subframes;
a determining module (620) configured to determine a location and a number of a short transmission time interval sTTI resource activated in a target scheduling subframe according to the SPS configuration information and reference information; wherein the reference information comprises sTTI configuration information; and
a sending module (630) configured to provide an activation parameter to a physical layer in accordance with the sTTI resource activated in the target scheduling subframe, such that the physical layer generates an activation notification containing the activation parameter for notifying a terminal of the sTTI resource activated in the target scheduling subframe, wherein the activation parameter is configured to indicate the number and the location of the sTTI resource activated in the target scheduling subframe.

10. The scheduler according to claim 9, wherein one subframe is taken as a notification period by the activation notification.

11. The scheduler according to claim 9 or 10, wherein the activation notification is downlink control information DCI.

12. The scheduler according to any one of claims 9 to 11, wherein the reference information further comprises at least one of: data to be scheduled by the scheduler, or a radio resource condition.

13. The scheduler according to any one of claims 9 to 12, wherein each sTTI resource is 0.5 ms or two orthogonal frequency division multiplexing OFDM symbols.

14. A terminal, comprising:
a configuration receiving module (710) configured to receive, by a radio resource control, RRC, layer, semi-persistent scheduling, SPS, configuration information sent by a base station, the SPS configuration information comprising a period of SPS, and the period of the SPS being used for indicating a time interval between two adjacent scheduling subframes;
a notification acquiring module (720) configured to acquire, by a physical layer, an activation notification sent by the base station according to a period of the SPS, the activation notification containing an activation parameter for indicating a short transmission time interval, sTTI, resource activated in a target scheduling subframe, wherein the activation parameter is configured to indicate a number and a location of the sTTI resource activated in the target scheduling subframe; and
a data transmission module (730) configured to occupy the number and the location of the activated sTTI resource in the target scheduling subframe for data transmission.

15. The terminal according to claim 14, wherein the activation notification is downlink control information DCI.

16. The terminal according to claim 14 or 15, wherein each sTTI resource is 0.5 ms or two orthogonal frequency division multiplexing OFDM symbols.

## Patentansprüche

1. Verfahren zur Ressourcenplanung, angewendet in einem Scheduler einer Basisstation, wobei das Verfahren Folgendes umfasst:
Empfangen (201) von SPS- (semipersistentes Scheduling) -Konfigurationsinformationen, die von einer Funkressourcensteuerungs- (Radio Resource Control), RRC, -schicht gesendet werden, wobei die SPS-Konfigurationsinformationen eine SPS-Dauer umfassen und die Dauer des SPS zum Anzeigen eines Zeitintervalls zwischen zwei benachbarten Scheduling-Subframes verwendet wird;
Bestimmen (202) eines Orts und einer Zahl einer Ressource mit kurzem Übertragungszeitintervall (Short Transmission Time Interval), sTTI, die in einem Ziel-Scheduling-Subframe aktiviert wird, gemäß den SPS-Konfigurationsinformationen und Referenzinformationen; wobei die Referenzinformationen sTTI-Konfigurationsinformationen umfassen; und
Anlegen (203) eines Aktivierungsparameters an eine physikalische Schicht gemäß der in dem Ziel-Scheduling-Subframe aktivierten sTTI-Ressource, so dass die physikalische Schicht eine Aktivierungsbenachrichtigung erzeugt, die den Aktivierungsparameter enthält, um ein Endgerät über die in dem Ziel-Scheduling-Subframe aktivierte sTTI-Ressource zu benachrichtigen, wobei der Aktivierungsparameter so konfiguriert ist, dass er die Zahl und den Ort der in dem Ziel-Scheduling-Subframe aktivierten sTTI-Ressource angibt.

2. Verfahren nach Anspruch 1, wobei ein Subframe von der Aktivierungsbenachrichtigung als eine Benachrichtigungsdauer genommen wird.

3. Verfahren nach Anspruch 1 oder 2, wobei die Aktivierungsbenachrichtigung Downlink-Steuerinformationen (Downlink Control Information), DCI, ist.

4. Verfahren nach einem der Ansprüche 1 bis 3, wobei die Referenzinformationen ferner mindestens eines der folgenden umfassen: von dem Scheduler zu verplanende Daten oder eine Funkressourcenbedingung.

5. Verfahren nach einem der Ansprüche 1 bis 4, wobei jede sTTI-Ressource 0,5 ms oder zwei Symbole des orthogonalen Frequenzmultiplexverfahrens (Orthogonal Frequency Division Multiplexing), OFDM, ist.

6. Verfahren zur Ressourcenplanung, angewendet in einem Endgerät, wobei das Verfahren Folgendes umfasst:
Empfangen (401), durch eine Funkressourcensteuerungs-(Radio Resource Control), RRC, -schicht, von SPS-(semipersistentes Scheduling) -Konfigurationsinformationen, die von einer Basisstation gesendet werden, wobei die SPS-Konfigurationsinformationen eine SPS-Dauer umfassen und die Dauer des SPS zum Anzeigen eines Zeitintervalls zwischen zwei benachbarten Scheduling-Subframes verwendet wird;
Erfassen (402), durch eine physikalische Schicht, einer von der Basisstation gesendeten Aktivierungsbenachrichtigung gemäß der Dauer des SPS, wobei die Aktivierungsbenachrichtigung einen Aktivierungsparameter zum Anzeigen von einer in einem Ziel-Scheduling-Teilframe aktivierten Ressource mit kurzem Übertragungszeitintervall (Short Transmission Time Interval), sTTI, enthält, wobei der Aktivierungsparameter zum Anzeigen einer Zahl und eines Orts der in dem Ziel-Scheduling-Subframe aktivierten sTTI-Ressourcen konfiguriert ist; und
Belegen (403) der Zahl und des Orts der aktivierten sTTI-Ressource in dem Ziel-Scheduling-Subframe für die Datenübertragung.

7. Verfahren nach Anspruch 6, wobei die Aktivierungsbenachrichtigung Downlink-Steuerinformationen DCI ist.

8. Verfahren nach Anspruch 6 oder 7, wobei jede sTTI-Ressource 0,5 ms oder zwei Symbole des orthogonalen Frequenzmultiplexverfahrens (Orthogonal Frequency Division Multiplexing), OFDM, ist.

9. Scheduler, angewendet in einer Basisstation, wobei der Scheduler Folgendes umfasst:
ein Empfangsmodul (610), das konfiguriert ist zum Empfangen von SPS- (semipersistentes Scheduling) -Konfigurationsinformationen, die von einer Funkressourcensteuerungs- (Radio Resource Control), RRC, -schicht gesendet werden, wobei die SPS-Konfigurationsinformationen eine SPS-Dauer umfassen und die Dauer des SPS zum Anzeigen eines Zeitintervalls zwischen zwei benachbarten Scheduling-Subframes verwendet wird;
ein Bestimmungsmodul (620), das konfiguriert ist zum Bestimmen eines Orts und einer Zahl einer in einem Ziel-Scheduling-Subframe aktivierten Ressource mit kurzem Übertragungszeitintervall sTTI gemäß den SPS-Konfigurationsinformationen und Referenzinformationen, wobei die Referenzinformationen sTTI-Konfigurationsinformationen umfassen; und
ein Sendemodul (360), das konfiguriert ist zum Anlegen eines Aktivierungsparameters an eine physikalische Schicht gemäß der in dem Ziel-Scheduling-Subframe aktivierten sTTI-Ressource, so dass die physikalische Schicht eine Aktivierungsbenachrichtigung erzeugt, die den Aktivierungsparameter enthält, um ein Endgerät über die in dem Ziel-Scheduling-Subframe aktivierte sTTI-Ressource zu benachrichtigen, wobei der Aktivierungsparameter so konfiguriert ist, dass er die Zahl und den Ort der in dem Ziel-Scheduling-Subframe aktivierten sTTI-Ressource angibt.

10. Scheduler nach Anspruch 9, wobei ein Subframe von der Aktivierungsbenachrichtigung als eine Benachrichtigungsdauer genommen wird.

11. Scheduler nach Anspruch 9 oder 10, wobei die Aktivierungsbenachrichtigung Downlink-Steuerinformationen DCI ist.

12. Scheduler nach einem der Ansprüche 9 bis 11, wobei die Referenzinformationen ferner mindestens eines der folgenden umfassen: von dem Scheduler zu verplanende Daten oder eine Funkressourcenbedingung.

13. Scheduler nach einem der Ansprüche 9 bis 12, wobei jede sTTI-Ressource 0,5 ms oder zwei Symbole des orthogonalen Frequenzmultiplexverfahrens (Orthogonal Frequency Division Multiplexing), OFDM, ist.

14. Endgerät, umfassend:
ein Konfigurationsempfangsmodul (710), das konfiguriert ist zum Empfangen, durch eine Funkressourcensteuerungs- (Radio Resource Control), RRC, -schicht, von SPS- (semipersistentes Scheduling) -Konfigurationsinformationen, die von einer Basisstation gesendet werden, wobei die SPS-Konfigurationsinformationen eine SPS-Dauer umfassen und die Dauer des SPS zum Anzeigen eines Zeitintervalls zwischen zwei benachbarten Scheduling-Subframes verwendet wird;
ein Benachrichtigungserfassungsmodul (720), das konfiguriert ist zum Erfassen, durch eine physikalische Schicht, einer von der Basisstation gesendeten Aktivierungsbenachrichtigung gemäß einer Dauer des SPS, wobei die Aktivierungsbenachrichtigung einen Aktivierungsparameter zum Anzeigen von einer in einem Ziel-Scheduling-Teilframe aktivierten Ressource mit kurzem Übertragungszeitintervall (Short Transmission Time Interval), sTTI, enthält, wobei der Aktivierungsparameter zum Anzeigen einer Zahl und eines Orts der in dem Ziel-Scheduling-Subframe aktivierten sTTI-Ressourcen konfiguriert ist; und
ein Datenübertragungsmodul (730), das konfiguriert ist zum Belegen der Zahl und des Orts der aktivierten sTTI-Ressource in dem Ziel-Scheduling-Subframe für die Datenübertragung.

15. Endgerät nach Anspruch 14, wobei die Aktivierungsbenachrichtigung Downlink-Steuerinformationen DCI ist.

16. Endgerät nach einem der Ansprüche 14 oder 15, wobei jede sTTI-Ressource 0,5 ms oder zwei Symbole des orthogonalen Frequenzmultiplexverfahrens (Orthogonal Frequency Division Multiplexing), OFDM, ist.

## Revendications

1. Procédé d'ordonnancement de ressources, appliqué dans un ordonnanceur d'une station de base, le procédé comprenant :
la réception (201) d'informations de configuration d'ordonnancement semi-persistant, SPS, envoyées par une couche de commande de ressources radio, RRC, les informations de configuration de SPS comprenant une période de SPS et la période du SPS servant à indiquer un intervalle de temps entre deux sous-trames d'ordonnancement adjacentes ;
la détermination (202) d'un emplacement et d'un numéro d'une ressource d'intervalle de temps de transmission court, sTTI, activée dans une sous-trame d'ordonnancement cible conformément aux informations de configuration de SPS et à des informations de référence ; dans lequel les informations de référence comprennent des informations de configuration de sTTI ; et
la fourniture (203) d'un paramètre d'activation à une couche physique en fonction de la ressource sTTI activée dans la sous-trame d'ordonnancement cible, de telle sorte que la couche physique génère une notification d'activation contenant le paramètre d'activation pour notifier à un terminal la ressource sTTI activée dans la sous-trame d'ordonnancement cible, dans lequel le paramètre d'activation est configuré pour indiquer le numéro et l'emplacement de la ressource sTTI activée dans la sous-trame d'ordonnancement cible.

2. Procédé selon la revendication 1, dans lequel une sous-trame unique est utilisée comme période de notification par la notification d'activation.

3. Procédé selon la revendication 1 ou 2, dans lequel la notification d'activation consiste en informations de commande de liaison descendante, DCI.

4. Procédé selon l'une quelconque des revendications 1 à 3, dans lequel les informations de référence comprennent en outre au moins : des données destinées à être ordonnancées par l'ordonnanceur et/ou une condition de ressource radio.

5. Procédé selon l'une quelconque des revendications 1 à 4, dans lequel chaque ressource sTTI est de 0,5 ms ou deux symboles de multiplexage par répartition orthogonale de la fréquence, OFDM.

6. Procédé d'ordonnancement de ressources, appliqué dans un terminal, le procédé comprenant :
la réception (401), par une couche de commande de ressources radio, RRC, d'informations de configuration d'ordonnancement semi-persistant, SPS, envoyées par une station de base, les informations de configuration de SPS comprenant une période de SPS, et la période du SPS servant à indiquer un intervalle de temps entre deux sous-trames d'ordonnancement adjacentes ;
l'acquisition (402), par une couche physique, d'une notification d'activation envoyée par la station de base conformément à la période de SPS, la notification d'activation contenant un paramètre d'activation pour indiquer une ressource d'intervalle de temps de transmission court, sTTI, activée dans une sous-trame d'ordonnancement cible, dans lequel le paramètre d'activation est configuré pour indiquer un numéro et un emplacement de la ressource sTTI activée dans la sous-trame d'ordonnancement cible ; et
l'occupation (403) du numéro et de l'emplacement de la ressource sTTI activée dans la sous-trame d'ordonnancement cible pour une transmission de données.

7. Procédé selon la revendication 6, dans lequel la notification d'activation consiste en informations de commande de liaison descendante DCI.

8. Procédé selon la revendication 6 ou 7, dans lequel chaque ressource sTTI est de 0,5 ms ou deux symboles OFDM de multiplexage par répartition orthogonale de la fréquence.

9. Ordonnanceur, appliqué dans une station de base, l'ordonnanceur comprenant :
un module de réception (610) configuré pour recevoir des informations de configuration d'ordonnancement semi-persistant, SPS, envoyées par une couche de commande de ressources radio, RRC, les informations de configuration de SPS comprenant une période de SPS et la période du SPS servant à indiquer un intervalle de temps entre deux sous-trames d'ordonnancement adjacentes ;
un module de détermination (320) configuré pour déterminer un emplacement et un numéro d'une ressource d'intervalle de temps de transmission court, sTTI, activée dans une sous-trame d'ordonnancement cible conformément aux informations de configuration de SPS et à des informations de référence ; dans lequel les informations de référence comprennent des informations de configuration de sTTI ; et
un module d'envoi (630) configuré pour fournir un paramètre d'activation à une couche physique en fonction de la ressource sTTI activée dans la sous-trame d'ordonnancement cible, de telle sorte que la couche physique génère une notification d'activation contenant le paramètre d'activation pour notifier à un terminal la ressource sTTI activée dans la sous-trame d'ordonnancement cible, dans lequel le paramètre d'activation est configuré pour indiquer le numéro et l'emplacement de la ressource sTTI activée dans la sous-trame d'ordonnancement cible.

10. Ordonnanceur selon la revendication 9, dans lequel une sous-trame unique est utilisée comme période de notification par la notification d'activation.

11. Ordonnanceur selon la revendication 9 ou 10, dans lequel la notification d'activation consiste en informations de commande de liaison descendante DCI.

12. Ordonnanceur selon l'une quelconque des revendications 9 à 11, dans lequel les informations de référence comprennent en outre au moins : des données destinées à être ordonnancées par l'ordonnanceur et/ou une condition de ressource radio.

13. Ordonnanceur selon l'une quelconque des revendications 9 à 12, dans lequel chaque ressource sTTI est de 0,5 ms ou deux symboles OFDM de multiplexage par répartition orthogonale de la fréquence.

14. Terminal, comprenant :
un module de réception de configuration (710) configuré pour recevoir, par une couche de commande de ressources radio, RRC, des informations de configuration d'ordonnancement semi-persistant, SPS, envoyées par une station de base, les informations de configuration de SPS comprenant une période de SPS, et la période de SPS servant à indiquer un intervalle de temps entre deux sous-trames d'ordonnancement adjacentes ;
un module d'acquisition de notification (720), configuré pour acquérir, par une couche physique, une notification d'activation envoyée par la station de base conformément à la période de SPS, la notification d'activation contenant un paramètre d'activation pour indiquer une ressource d'intervalle de temps de transmission court, sTTI, activée dans une sous-trame d'ordonnancement cible, dans lequel le paramètre d'activation est configuré pour indiquer un numéro et un emplacement de la ressource sTTI activée dans la sous-trame d'ordonnancement cible ; et
un module de transmission de données (730) configuré pour occuper le numéro et l'emplacement de la ressource sTTI activée dans la sous-trame d'ordonnancement cible pour une transmission de données.

15. Terminal selon la revendication 14, dans lequel la notification d'activation consiste en informations de commande de liaison descendante DCI.

16. Terminal selon la revendication 14 ou 15, dans lequel chaque ressource sTTI est de 0,5 ms ou deux symboles OFDM de multiplexage par répartition orthogonale de la fréquence.
